# EUROPÄISCHE PATENTSCHRIFT

(11) **EP 4 621 285 B1**
(45) Veröffentlichungstag und Bekanntmachung des Hinweises auf die Patenterteilung: **09.12.2026**
(21) Anmeldenummer: 24165279.1
(22) Anmeldetag: 21.03.2024
(51) Int. Cl.: F21S 41/141, F21S 41/27, F21S 41/32, F21S 41/365

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR VÉHICULE AUTOMOBILE

(43) Veröffentlichungstag der Anmeldung: 24.09.2025
(73) Patentinhaber: ZKW Group GmbH, 3250 Wieselburg (AT)
(72) Erfinder: Hamar, Martin, 77900 Olomouc (CZ)
(74) Vertreter: Patentanwaltskanzlei Matschnig & Forsthuber OG

(56) Entgegenhaltungen:
- EP-B1- 2 390 561
- DE-A1- 102010 018 119
- US-A1- 2019 316 749
- US-B1- 10 288 248

## Beschreibung

Die Erfindung betrifft eine Beleuchtungsvorrichtung für ein Kraftfahrzeug, wobei die Beleuchtungsvorrichtung umfasst:
- eine Lichtquelle, welche dazu eingerichtet ist, Licht zu emittieren,
- einen transparenten Lichtleitkörper, welcher dazu eingerichtet ist, von der Lichtquelle emittiertes Licht als Lichtverteilung abzubilden, sowie
- einen Lichteinkoppelbereich, welcher dazu eingerichtet ist, von der Lichtquelle emittiertes Licht in den Lichtleitkörper einzukoppeln,
wobei der Lichtleitkörper an einer Oberseite eine erste Lichtumlenkfläche, an einer Unterseite eine zweite Lichtumlenkfläche sowie eine Lichtaustrittsfläche aufweist, wobei von der Lichtquelle emittiertes und über den Lichteinkoppelbereich in den Lichtleitkörper eingekoppeltes Licht sich in dem Lichtleitkörper als erstes Lichtbündel in einer ersten Lichtausbreitungsrichtung fortpflanzt, wobei der Lichtleitkörper, beispielsweise an einer Unterseite, eine quer zu der ersten Lichtausbreitungsrichtung verlaufende Kante aufweist, und wobei nach der Kante das Licht sich als zweites Lichtbündel zu der ersten Lichtumlenkfläche in einer zweiten Lichtausbreitungsrichtung fortpflanzt, wobei die zweite Lichtausbreitungsrichtung dieselbe Richtung aufweist wie die erste Lichtausbreitungsrichtung, und von der ersten Lichtumlenkfläche als drittes Lichtbündel zu der zweiten Lichtumlenkfläche umgelenkt wird und von der zweiten Lichtumlenkfläche als viertes Lichtbündel zu der Lichtaustrittsfläche umgelenkt wird, über die Lichtaustrittsfläche als fünftes Lichtbündel austritt und als Lichtverteilung in einen Bereich vor dem Lichtleitkörper abgebildet wird, wobei die Lichtaustrittsfläche eben ausgebildet ist, und wobei in einem Schnitt oder mehreren Schnitten durch den Lichtleitkörper entlang einer oder mehrerer vertikaler Schnittebenen, welche parallel zu der ersten Lichtausbreitungsrichtung oder parallel zu einer vertikalen Längsmittelebene verläuft bzw. verlaufen, die erste Lichtumlenkfläche in der oder den Schnittebenen eine erste Schnittkurve bildet, und die zweite Lichtumlenkfläche eine zweite Schnittkurve bildet.

Aus dem Stand der Technik sind Beleuchtungsvorrichtungen für den Einsatz in einem Kraftfahrzeug bzw. in einem Kraftfahrzeugscheinwerfer zur Erzeugung einer Lichtverteilung bekannt, wie US 2019/316749 A1 oder US 10 288 248 B1. Typischerweise emittiert eine Lichtquelle Licht, das in einen optischen Körper, beispielsweise einen Lichtleitkörper, eingekoppelt wird. Bei einem solchen Lichtleitkörper handelt es sich beispielsweise um einen Körper aus einem optisch transparenten Material, in welchem sich das eingekoppelte Licht zu einer Lichtaustrittsfläche fortpflanzt, über die Lichtaustrittsfläche aus dem Lichtleitkörper austritt und in einen Bereich vor der Beleuchtungsvorrichtung, insbesondere vor dem Kraftfahrzeugscheinwerfer bzw. vor dem Kraftfahrzeug, abgestrahlt wird und dort eine Lichtverteilung bildet.

Häufig ist im Lichtausbreitungspfad ein Abschattelement vorgesehen, welches einen Teil des eingekoppelten Lichtes abschattet, sodass bei geeigneter Positionierung des Abschattelementes dessen Rand als eine die Lichtverteilung begrenzende Hell-Dunkel-Grenze "abgebildet" wird bzw. als Hell-Dunkel-Grenze sichtbar wird. Beispielsweise kann auf diese Weise eine Abblendlichtverteilung erzeugt werden.

Oftmals ist das Abschattelement als eine quer zu dem Lichtausbreitungspfad verlaufende Kante in dem Lichtleitkörper ausgebildet.

Zur Abbildung des aus dem Lichtleitkörper austretenden Lichtes als Lichtverteilung ist häufig vorgesehen, dass anschließend an die Lichtaustrittsfläche des Lichtleitkörpers eine Projektionslinse angeordnet ist, welche das austretende Licht als Lichtverteilung abbildet. Die Projektionslinse ist dabei typischer Weise in einem Abstand zu der Lichtaustrittsfläche angeordnet.

Nachteilig an einer solchen Ausgestaltung ist, dass optische Fehler, insbesondere Farbfehler durch den Austritt aus einem Optikkörper in ein anderes Medium, insbesondere Luft, und den Wiedereintritt in die Projektionslinse auftreten, die sich als unerwünschte optische Effekte im Lichtbild widerspiegeln.

Es kann auch vorgesehen sein, dass die Lichtaustrittsfläche zur Realisierung der Funktion einer Projektionslinse entsprechend gekrümmt ausgebildet ist. In diesem Fall erfolgt kein Austritt des Lichtes aus dem Lichtleitkörper. Allerdings wird zunehmend von Fahrzeughersteller aus Designgründen gewünscht, dass die Lichtaustrittsflächen von solchen Beleuchtungsvorrichtungen eben ausgebildet sind.

Es ist Aufgabe der Erfindung, eine Beleuchtungsvorrichtung mit einem Lichtleitkörper bereitzustellen, bei welcher die oben beschriebenen Nachteile abgemildert oder beseitigt sind.

Diese Aufgabe wird mit einer eingangs beschriebenen Beleuchtungsvorrichtung gelöst, bei welcher erfindungsgemäß
- die erste Schnittkurve konvex oder konkav gekrümmt ist und die Form eines Astes einer Hyperbel aufweist, wobei ein Brennpunkt der Hyperbel außerhalb des Lichtleitkörpers, in einem der zweiten Lichtumlenkfläche abgewandten Bereich des Lichtleitkörper liegt, und wobei
- die zweite Schnittkurve konvex gekrümmt ist und die Form einer Parabel mit einem Brennpunkt aufweist, wobei der Brennpunkt der Parabel mit dem außerhalb des Lichtleitkörpers in einem der zweiten Lichtumlenkfläche abgewandten Bereich des Lichtleitkörper liegenden Brennpunkt der ersten Schnittkurve zusammenfällt,
und wobei der Gesamtbrennpunkt des von der ersten Umlenkfläche und der zweiten Umlenkfläche gebildeten Umlenksystems in der oder den Schnittebenen an der Kante oder in einem Bereich der Kante derart angeordnet ist, dass das aus der ersten und der zweiten Umlenkfläche bestehende Umlenksystem die von der Lichtquelle emittierten Lichtstrahlen als Lichtverteilung mit einer Hell-Dunkel-Grenze, welche die Lichtverteilung, insbesondere nach oben, begrenzt, abbildet, wobei die Hell-Dunkel-Grenze, insbesondere die Form und/oder Lage der Hell-Dunkel-Grenze, von der Kante bestimmt wird.

Der Begriff "Lichtausbreitungsrichtung" bezeichnet jeweils die resultierende Richtung der Lichtstrahlen des jeweils betrachteten Lichtbündels.

Erfindungsgemäß wirken die beiden Umlenkflächen gemeinsam wie eine Projektionslinse und erzeugen die Abbildung des gewünschten Lichtbildes, wobei die Lichtaustrittsfläche des Lichtleitkörpers eben ausgebildet werden kann, da die Abbildungsfunktion lediglich von den beiden Umlenkflächen (= abbildendes System, Abbildungssystem) realisiert wird. Es kann können somit brechende Optiken in dem abbildenden System vermieden werden, da die Abbildung mittels zweier Reflexionen realisiert wird auch und die brechende Kante innerhalb des Lichtleitkörpers ausgebildet ist bzw. den Lichtleitkörper begrenzt, aber nicht außerhalb liegt. Farbeffekte (chromatische Abberation) können daher mit der erfindungsgemäßen Beleuchtungsvorrichtung vermieden werden, bei gleichzeitig ebener Lichtaustrittsfläche.

Weitere vorteilhafte Ausgestaltungen der Beleuchtungsvorrichtung sind in den abhängigen Ansprüchen beschrieben.

Es kann vorgesehen sein, dass die Kante einen oder mehrere geradlinige Abschnitte umfasst, wobei beispielsweise bei zwei oder mehr geradlinigen Abschnitten diese in einer Richtung, insbesondere einer Vertikalrichtung, zueinander versetzt angeordnet sind.

Eine geradlinige Ausgestaltung stellt eine einfache Realisierung dar, versetzte Abschnitte können zur Realisierung einer Asymmetrie der Hell-Dunkel-Grenze in der erzeugten Lichtverteilung verwendet werden.

Bevorzugt kann vorgesehen sein, dass die Kante gekrümmt ausgebildet ist, wobei vorzugsweise die Kante in einer Petzvalfläche des Umlenksystems liegt, die Petzvalfläche des Umlenksystems tangiert, oder im Nahbereich der Petzvalfläche liegt.

In diesem Zusammenhang kann vorgesehen sein, dass die Kante einen oder mehrere Abschnitte umfasst, wobei bei zwei oder mehr Abschnitten diese in einer Richtung, insbesondere einer Vertikalrichtung, zueinander versetzt angeordnet sind, wiederum beispielsweise zur Realisierung einer asymmetrischen Hell-Dunkel-Grenze in der Lichtverteilung, welche diese nach oben hin begrenzt.

Es kann vorgesehen sein, dass in parallelen Vertikalschnitten die ersten Schnittkurven und/oder die zweiten Schnittkurven identische Form aufweisen.

In anderen Worten sieht die Krümmung der ersten Schnittkurve in mehreren beabstandeten Schnitten immer gleich aus, ebenso die Krümmung der zweiten Schnittkurve. Es werden somit die erste und zweite Umlenkfläche bzw. der Lichtleitkörper in diesem Bereich aus einer ersten Schnittkurve und einer zweiten Schnittkurve in einem Vertikalschnitt (mathematisch) extrudiert.

Es kann aber auch vorgesehen sein, dass in parallelen Vertikalschnitten die ersten Schnittkurven und/oder die zweiten Schnittkurven unterschiedliche Form, insbesondere unterschiedliche Krümmungen aufweisen, wobei beispielsweise die erste und die zweite Umlenkfläche jeweils durch Rotation der ersten und zweiten Schnittkurve um ihre jeweilige Symmetrieachse gebildet sind.

Beispielsweise geht man von einer vertikalen Schnittkurve, welcher der Längsmittelebene entspricht, aus, und rotiert die erste und die zweite Schnittkurve um ihre jeweilige Hyperbel-Symmetrieachse (Verbindung der beiden Brennpunkte der Hyperbel) bzw. Parabelsymmetrieachse (Verbindungsgerade von Brennpunkt und Scheitel der Parabel).

Es kann vorgesehen sein, dass der Lichteinkoppelbereich derart, z.B. in Form eines Kollimators, ausgebildet ist, dass die von der Lichtquelle emittierten Lichtstrahlen im Lichtleitkörper im Wesentlichen in die erste Lichtausbreitungsrichtung ausgerichtet werden, wobei insbesondere das erste Lichtbündel in einen Bereich oberhalb der Kante gebündelt wird.

Entsprechend wird die gewünschte Ausrichtung der in den Lichtleitkörper eingekoppelten Lichtstrahlen durch die Ausgestaltung des Lichteinkoppelbereiches realisiert.

Das eingekoppelte Licht bewegt sich somit in die erste Lichtausbreitungsrichtung, wobei diese Lichtstrahlen vorzugsweise gebündelt sind, d.h. in Richtung der Kante zusammenlaufen. Bei einer idealen, punktförmigen Lichtquelle könnte vorgesehen sein, dass die Lichtstrahlen in die Kante oder in einen Punkt, der auf oder nahe zu der Kante liegt, fokussiert werden. Durch die in Praxis gegebenen Ausdehnung der Lichtquelle bewegen sich aber auch Lichtstrahlen in einem Abstand oberhalb der Kante an der Kante vorbei. Diese oberhalb passierenden Strahlen beleuchten in der Lichtverteilung den unterhalb bzw. unteren Bereich der Lichtverteilung, je näher sich die Lichtstrahlen an der Kante vorbeibewegen, ums weiter oben liegen diese Lichtstrahlen im Lichtbild. Die Kante ist im Lichtbild als Hell-Dunkel-Grenze zu erkennen, welche das Lichtbild nach oben hin begrenzt. Nachdem die Lichtstrahlen S1 gebündelt und im Wesentlichen auf die Kante gerichtet sind, ist im Bereich der Hell-Dunkel-Grenze die Lichtverteilung am hellsten bzw. treten dort die höchsten Werte der Beleuchtungsstärke auf.

Es ist von Vorteil, wenn der Lichteinkoppelbereich und der Lichtleitkörper einstückig miteinander verbunden sind und vorzugsweise aus demselben Material gebildet sind.

Zur Homogenisierung des aus dem Lichtleitkörper austretenden Lichtes kann vorgesehen sein, dass auf der ebenen Lichtaustrittsfläche Polsteroptiken vorgesehen sind.

Weiters wird die Aufgabe mit einem Beleuchtungssystem gelöst, welche zwei oder mehr oben beschriebene erfindungsgemäße Beleuchtungsvorrichtungen umfasst.

Beispielsweise ist vorgesehen, dass die zwei oder mehr Beleuchtungsvorrichtungen seitlich nebeneinander angeordnet sind, wobei beispielsweise die ersten Lichtausbreitungsrichtungen in den Lichtleitkörpern parallel zueinander ausgerichtet sind oder unter einem Winkel zueinander geneigt sind.

Die Beleuchtungsvorrichtung gemeinsam erzeugen jeweils eine Lichtverteilung, welche gemeinsam dann die resultierende Gesamtlichtverteilung, beispielsweise eine Abblendlichtverteilung bilden.

Die Lichtquellen sind vorzugsweise in einer Reihe, insbesondere seitlich nebeneinander und quer, insbesondere normal einer ersten Gesamt-Lichtausbreitungsrichtung (= Resultierende aus den einzelnen ersten Lichtausbreitungsrichtungen) angeordnet.

Vorzugsweise sind bei einem solchen Beleuchtungssystem die Lichtleitkörper der Beleuchtungsvorrichtungen einstückig miteinander verbunden.

Es kann vorgesehen sein, dass die Lichtleitkörper, insbesondere Lichtaustrittsflächen, in eine gemeinsame, vorzugsweise ebene, System-Lichtaustrittsfläche münden oder diese bilden, wobei die System-Lichtaustrittsfläche senkrecht zu einer Längsmittelebene eines der Lichtleitkörper oder schräg, unter einem Winkel, insbesondere einem Horizontalwinkel, ungleich 0° zu dieser Längsmittelebene verläuft.

Beispielsweise münden die Lichtaustrittsfläche in einen vorgelagerten, vorzugsweise einstückig mit den Lichtleitkörpern ausgebildeten, lichtleitenden, insbesondere transparenten Körper, welcher den Lichtaustrittsflächen gegenüberliegende die die System-Lichtaustrittsfläche aufweist.

Weiters betrifft die Erfindung einen Scheinwerfer, insbesondere einen Kraftfahrzeugscheinwerfer, welcher ein oder mehrere oben beschriebene Beleuchtungsvorrichtungen und/oder ein oder mehrere vorstehend beschriebene Beleuchtungssysteme umfasst.

Schließlich betrifft die Erfindung noch ein Fahrzeug, insbesondere ein Kraftfahrzeug, wobei das Fahrzeug ein oder mehrere oben beschriebene Beleuchtungsvorrichtungen und/oder ein oder mehrere vorstehend beschriebene Beleuchtungssysteme und/oder einen oder mehrere oben beschriebene Scheinwerfer aufweist.

Nachfolgend wird die Erfindung anhand von beispielhaften Zeichnungen näher erläutert. Hierbei zeigt
Fig. 1 eine erfindungsgemäße Beleuchtungsvorrichtung in einem Vertikalschnitt,
Fig. 1a die Beleuchtungsvorrichtung aus Figur 1 mit Augenmerk auf geometrische Aspekte,
Fig. 1b einer Abwandlung der Beleuchtungsvorrichtung aus Figur 1 bzw. 1a in einer Darstellung analog zu Figur 1a,
Fig. 2 die Beleuchtungsvorrichtung aus Figur 1 bzw. ähnlich zu jener aus Figur 1 in einer perspektivischen Ansicht von schräg unten,
Fig. 3 ein Beleuchtungssystem umfassend fünf Beleuchtungsvorrichtungen ähnlich jenen aus Figur 1 in einer perspektivischen Ansicht von schräg oben,
Fig. 4 das Beleuchtungssystem aus Figur 3 in einer Ansicht von oben,
Fig. 5 eine Abwandlung des Beleuchtungssystems aus Figur 3 in einer Ansicht von oben,
Fig. 6 das Beleuchtungssystem aus Figur 5, mit Polsteroptiken auf der Gesamtsystemlichtaustrittsfläche, in einer perspektivischen Ansicht von schräg oben,
Fig. 7 schematisch eine Lichtverteilung erzeugt mit meiner Beleuchtungsvorrichtung aus Figur 1 bzw. einer einzelnen Beleuchtungsvorrichtung aus Figur 3 oder Figur 5, und
Fig. 8 eine Gesamtlichtverteilung erzeugt mit einem Beleuchtungssystem wie beispielsweise in Figur 3, 5 oder 6 gezeigt.

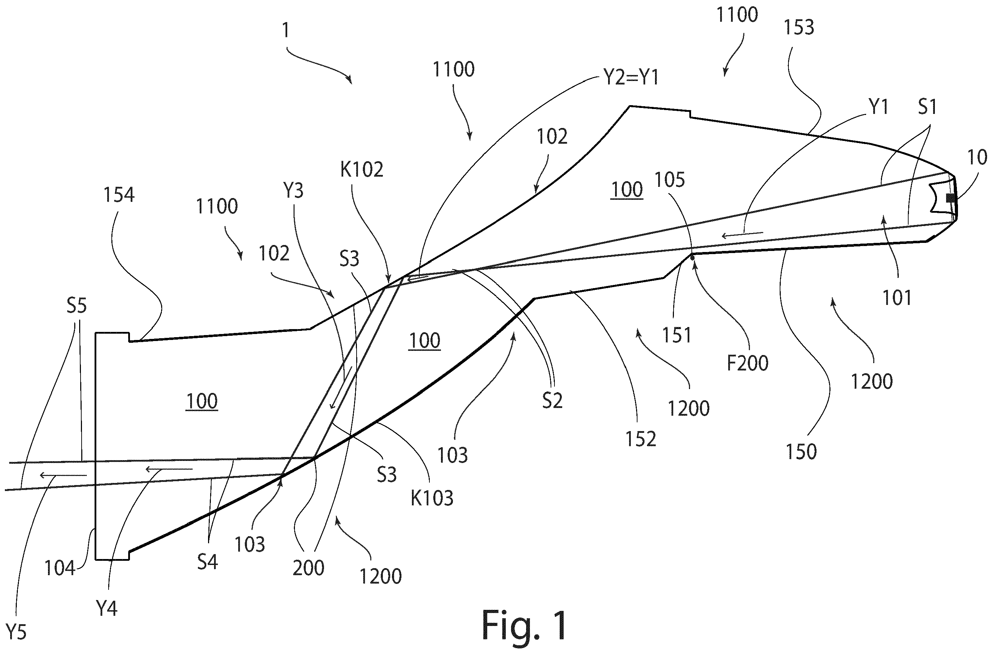

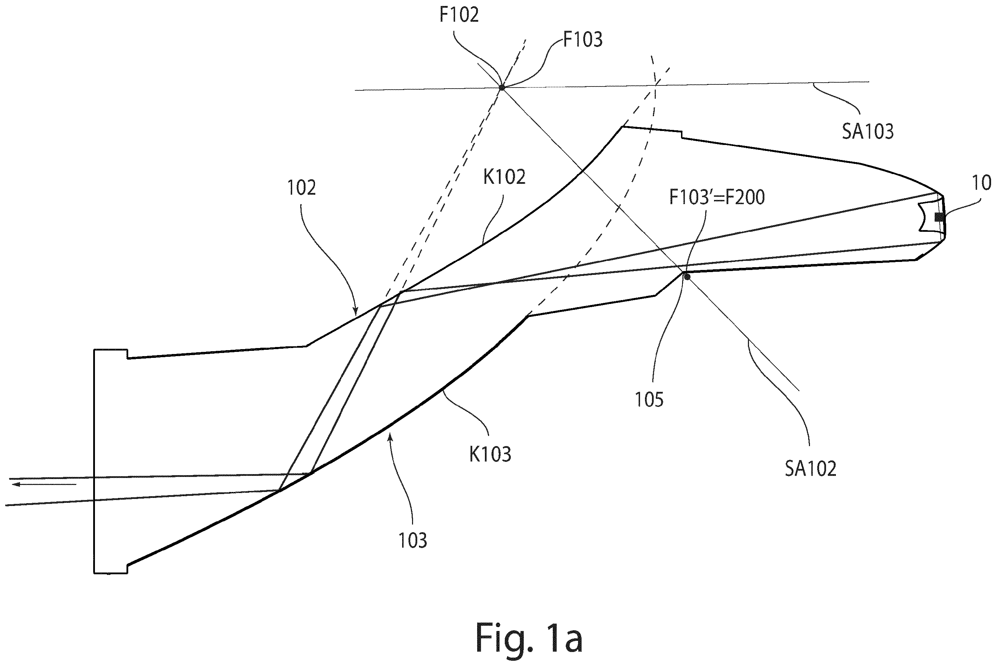

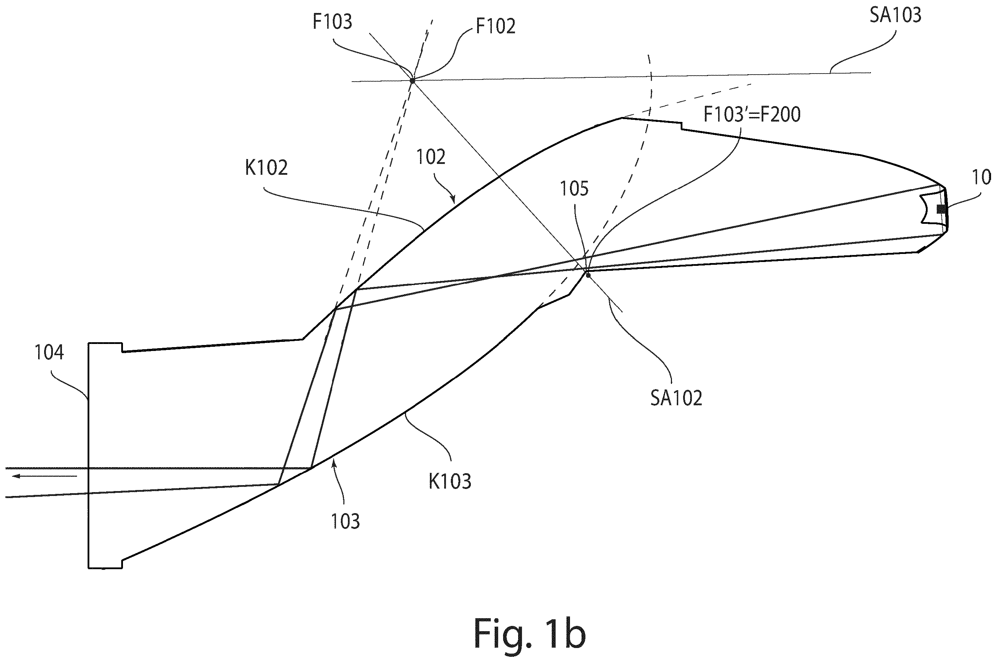

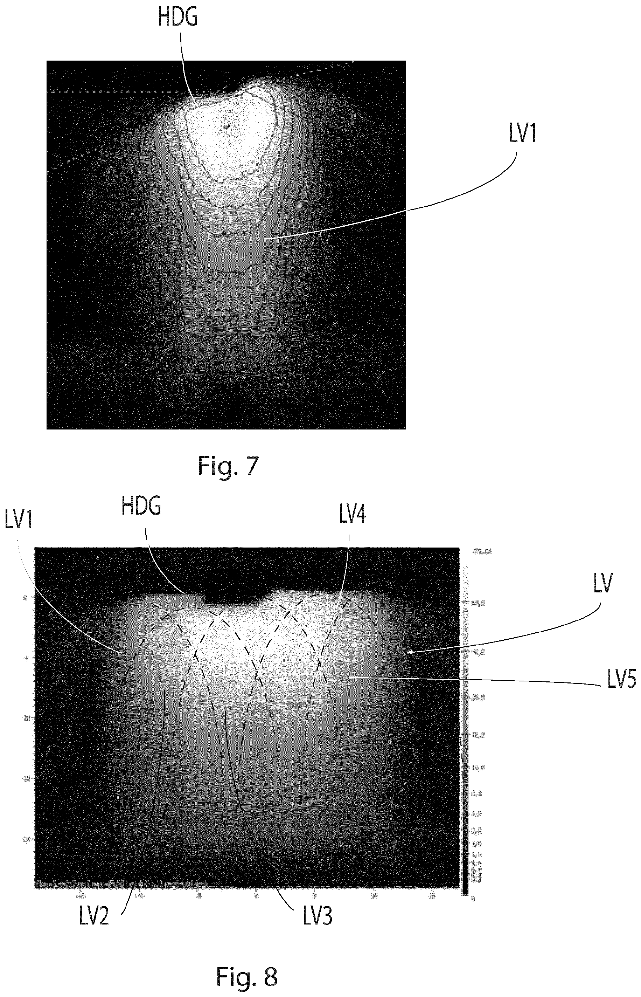

**Figur 1** zeigt eine Beleuchtungsvorrichtung 1 in einem Vertikalschnitt, wobei die Beleuchtungsvorrichtung eine Lichtquelle 10 umfasst, welche dazu eingerichtet ist, Licht zu emittieren. Weiters umfasst die Beleuchtungsvorrichtung 1 einen transparenten Lichtleitkörper 100, welcher dazu eingerichtet ist, von der Lichtquelle 10 emittiertes Licht als Lichtverteilung LV1 - LV5 abzubilden. Eine entsprechende Lichtverteilung LV1 ist beispielhaft in **Figur 7** dargestellt.

Bei der Lichtquelle kann es sich z.B. um eine oder mehrere LED's handeln, aber auch um eine komplexere Anordnung aus Licht emittierenden Elementen.

Der Lichtleitkörper 100 ist ein Vollkörper aus einem transparenten Material, beispielsweise Tarflon, in welchem sich Licht geradlinig fortpflanzen kann.

Der Lichtleitkörper 100 weist einen Lichteinkoppelbereich 101 auf, über welchen das von der Lichtquelle 10 emittierte Licht in den Lichtleitkörper 100 eingekoppelt wird. Der Lichteinkoppelbereich 101 ist Teil des Lichtleitkörpers 100, bzw. bilden Lichtleitkörper 100 und Lichteinkoppelbereich 101 ein Stück und sind aus demselben Material gebildet.

Der Lichtleitkörper 100 weist an einer Oberseite 1100 eine erste Lichtumlenkfläche 102, an einer Unterseite 1200 eine zweite Lichtumlenkfläche 103, sowie eine Lichtaustrittsfläche 104.

Die Lichtaustrittsfläche 104 ist eben ausgebildet.

Die Begriffe "oben" und "unten" beziehen sich dabei auf einen ordnungsgemäßen Einbau der Beleuchtungsvorrichtung in einem Kraftfahrzeug.

Von der Lichtquelle 10 emittiertes und über den Lichteinkoppelbereich 101 in den Lichtleitkörper 100 eingekoppeltes Licht pflanzt sich in dem Lichtleitkörper 100 als erstes Lichtbündel (Lichtstrahlen S1) in einer ersten Lichtausbreitungsrichtung Y1 fort.

Der Lichtleitkörper 100 weist an einer Unterseite 1200 eine quer, typischer Weise unter einem Winkel von etwa 90° zu der ersten Lichtausbreitungsrichtung Y1 verlaufende Kante 105 auf. Der Ausdruck "von etwa" soll zum Ausdruck bringen, dass die Kante 105 nicht zwingend geradlinig verlaufen muss, sondern auch gekrümmt sein kann bzw. vorzugsweise gekrümmt ist, sodass der Winkel zwischen Kante 105 und Richtung Y1 lokal unterschiedlich sein kann.

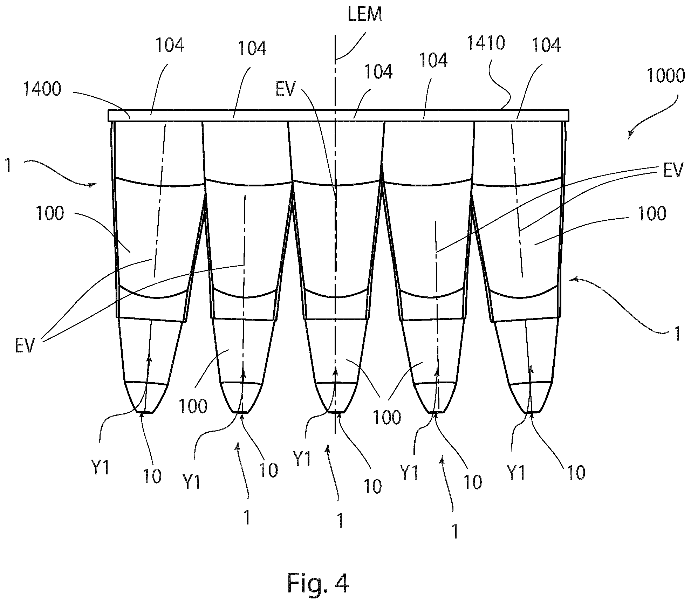

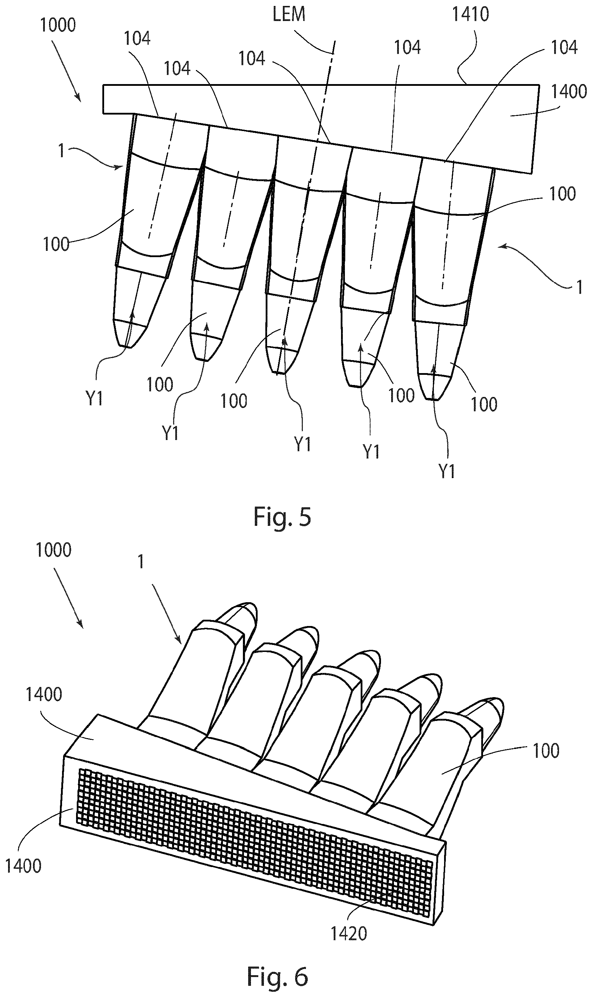

Der gezeigte Vertikalschnitt Ev verläuft senkrecht zu der ebenen Lichtaustrittsfläche 104 und/oder parallel u der ersten Lichtausbreitungsrichtung Y1. Beispielsweise handelt es sich bei dem Vertikalschnitt Ev um eine Längsmittelebene LEM des Lichtleitkörpers 1. Hinsichtlich der Bezeichnung der Schnitte und Ebenen siehe auch die **Figuren 4** **und** **5** bezüglich eines Beleuchtungssystems umfassend mehrere erfindungsgemäße Beleuchtungsvorrichtungen.

Die **Figuren 1****,** **1a** **und** **1b** zeigen dabei eine die Beleuchtungsvorrichtung 1 in einer Einbaulage in einem Kraftfahrzeug. In den in diesen Figuren gezeigten Beispielen steht die ebene Lichtaustrittsfläche 104 senkrecht auf eine Horizontalebene. In realen Situationen kann eine gewisse Neigung der Lichtaustrittsfläche zu der Horizontalebene gegeben sein, was aber nichts an der Bedeutung von Begriffen wie "oben", "unten", usw. ändert.

Nach der Kante 105 pflanzt sich das Licht als zweites Lichtbündel (Lichtstrahlen S2) zu der ersten Lichtumlenkfläche 102 in einer zweiten Lichtausbreitungsrichtung Y2 fort, wobei die zweite Lichtausbreitungsrichtung Y2 identisch zu der ersten Lichtausbreitungsrichtung Y1 ist.

An der ersten Lichtumlenkfläche 102 wird das auftreffende Licht S2 totalreflektiert und als drittes Lichtbündel (Lichtstrahlen S3) zu der zweiten Lichtumlenkfläche 103 in eine dritte Lichtausbreitungsrichtung Y3 umgelenkt. An der zweiten Lichtumlenkfläche 103 wird das auftreffende Licht S3 wieder totalreflektiert und als viertes Lichtbündel (Lichtstrahlen S4, vierte Lichtausbreitungsrichtung Y4) zu der Lichtaustrittsfläche 104 umgelenkt. Über die Lichtaustrittsfläche 104 treten diese Lichtstrahlen als fünftes Lichtbündel (Lichtstrahlen S5, fünftes Lichtausbreitungsrichtung Y5) aus dem Lichtleitkörper aus und werden als Lichtverteilung LV1 - LV5 in einen Bereich vor dem Lichtleitkörper 100 bzw. vor dem Fahrzeug abgebildet.

Die Kante 105 (auch als "Blendenkante" bezeichnet) ist von zwei Flächen 150, 151 an der Unterseite des 1200 des Lichtleitkörpers 100, welche diesen nach Außen begrenzen ("Grenzflächen") gebildet, wobei die beiden Grenzflächen 150, 151 in der Kante 105 zusammenlaufen. In dem gezeigten Beispiel geht die Fläche 151 über eine weitere Grenzfläche 152 in die zweite Umlenkfläche 103, wobei aber der Übergang auch direkt erfolgen kann; es wird an dieser Stelle darauf nicht näher eingegangen, da dieser Bereich für die Funktionsweise nebensächlich bzw. irrelevant ist.

Im vorderen Bereich an der Oberseite 1100 des Lichtleikörpers 100 ist noch eine Grenzfläche 154 dargestellt, die aber ebenfalls nicht näher beschrieben wird, da sie für die Funktion der Erfindung ebenfalls nebensächlich bzw. irrelevant ist.

Betrachtet man den Vertikalschnitt aus **Figur 1****,** so bildet in diesem Schnitt durch den Lichtleitkörper 100, welcher parallel zu der ersten Lichtausbreitungsrichtung Y1 verläuft, die erste Lichtumlenkfläche 102 eine erste Schnittkurve K102, und die zweite Lichtumlenkfläche 103 bildet eine zweite Schnittkurve K103.

Die erste Schnittkurve K102 ist in diesem Beispiel konkav gekrümmt und weist die Form eines Astes einer Hyperbel aufweist. Ein Brennpunkt F102 dieser Hyperbel, siehe dazu **Figur 1a****,** liegt außerhalb des Lichtleitkörpers 100, in einem der zweiten Lichtumlenkfläche 103 abgewandten Bereich des Lichtleitkörpers 100.

Die zweite Schnittkurve K103 ist konvex gekrümmt und weist die Form einer Parabel mit einem Brennpunkt F103 auf, wobei der Brennpunkt F103 der Parabel mit dem außerhalb des Lichtleitkörpers 100 in einem der zweiten Lichtumlenkfläche 103 abgewandten Bereich des Lichtleitkörper 100 liegenden Brennpunkt F102 der ersten Schnittkurve K102 zusammenfällt.

Die zweite Schnittkurve K103 ist - betrachtet man den Lichtleitkörper 100 - konvex gekrümmt. Aus Sicht der Lichtstrahlen, die sich in dem Lichtleitkörper 100 fortpflanzen, ist die zweite Schnittkurve K103 konkav gekrümmt, d.h. diese (totalreflektierende) Fläche bzw. Schnittkurve K102 wirkt wie ein Konkavspiegel für die Lichtstrahlen.

Die erste Schnittkurve K102 ist in dem Beispiel gemäß **Figur 1** **und** **1a** konkav gekrümmt. Aus Sicht der Lichtstrahlen, die sich in dem Lichtleitkörper 100 bewegen, ist konkave erste Schnittkurve K102 hingegen konvex.

Der zweite Brennpunkt F103' der Hyperbel bildet den Gesamtbrennpunkt F200 des von der ersten Schnittkurve K102 und der zweiten Schnittkurve K103 gebildeten Umlenksystems 200 in der dargestellten Schnittebene. Der Gesamtbrennpunkt F200 liegt im Bereich der Kante 105, entweder auf der Kante, oder im Lichtleitkörper 100 oberhalb der Kante 105, oder, wie grob schematisch gezeigt, insbesondere geringfügig, unterhalb der Kante 105, außerhalb des Lichtleitkörpers 100.

Das aus der ersten und der zweiten Umlenkfläche 102, 103 bestehende Umlenksystem 200 bildet die von der Lichtquelle 10 emittierten Lichtstrahlen als Lichtverteilung LV1 - LV5 ab. Dadurch, dass sich die Kante 105 im oder in der Nähe des Brennpunktes F200 des Gesamtsystems befindet, wird die Kante 105 in der Lichtverteilung als scharfe Hell-Dunkel-Grenze HD, welche die Lichtverteilung LV1 - LV5 nach oben begrenzt, abgebildet. Die Form der Kante 105 bestimmt dabei die Form der Hell-Dunkel-Grenze HD.

**Figur 1a** zeigt noch eine Symmetrieachse SA102 der Hyperbel sowie eine Symmetrieachse SA103 der Parabel. Die Symmetrieachse SA102 der Hyperbel läuft durch die beiden Brennpunkte F103, F103' (= F200) der Hyperbel.

Insbesondere liegt der Brennpunkt F103'/F200 in einer Brennebene bzw. Petzvalfläche des Umlenksystems bzw. Abbildungssystems 200.

Die Symmetrieachse SA103 der Parabel schneidet den Brennpunkt F103 der Hyperbel. Es kann vorgesehen sein, dass die Symmetrieachse SA103 parallel zu der Lichtaustrittsrichtung (Hauptabstrahlrichtung) der Lichtquelle verläuft.

Das Umlenk- bzw. Abbildungssystem 200 bildet somit eine positive Linse bzw. Sammellinse.

Der Begriff "Lichtausbreitungsrichtung" bezeichnet jeweils die resultierende Richtung der Lichtstrahlen des jeweils betrachteten Lichtbündels.

Es kann vorgesehen sein, dass die Kante 105 einen oder mehrere geradlinige Abschnitte umfasst, wobei beispielsweise bei zwei oder mehr geradlinigen Abschnitten diese in einer Richtung, insbesondere einer Vertikalrichtung, zueinander versetzt angeordnet sind. Typischer Weise liegt die Kante oder ihre Abschnitte in einer Horizontalebene.

Bevorzugt kann vorgesehen sein, dass die Kante 105 gekrümmt ausgebildet ist, wobei vorzugsweise die Kante in einer Petzvalfläche des Umlenksystems 200 liegt, die Petzvalfläche des Umlenksystems 200 tangiert, oder im Nahbereich der Petzvalfläche liegt.

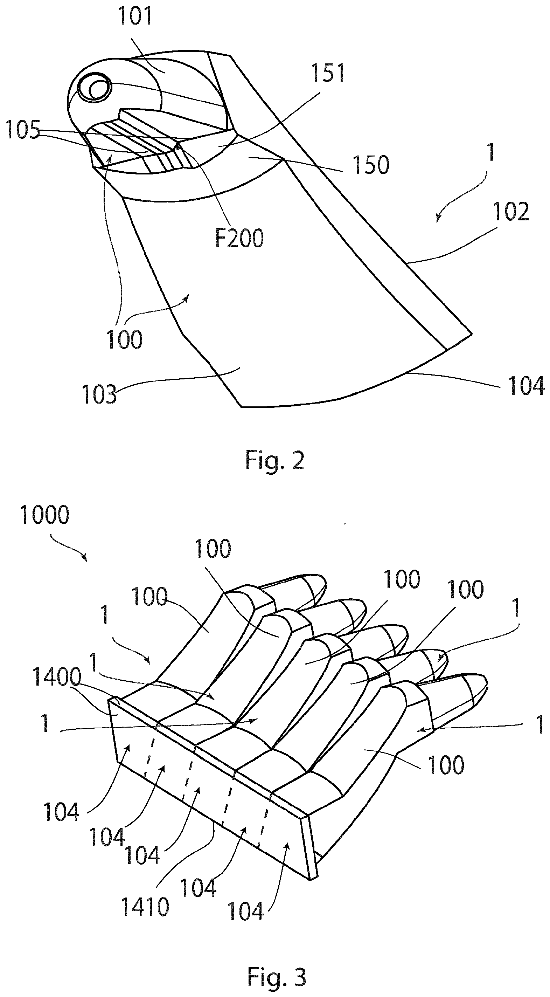

Eine erfindungsgemäße Beleuchtungsvorrichtung 1 mit einem Lichtleitkörper 100 aus **Figur** 1 bzw. ähnlich zu **Figur** 1 ist in einer perspektivischen Ansicht von schräg hinten ist in **Figur** 2 gezeigt. Hier ist zu erkennen, dass die Blendenkante 105 aus zwei vertikal zueinander versetzten Abschnitten besteht, die durch einen weiteren schräg verlaufenden Abschnitt miteinander verbunden sind. Auf diese Weise kann eine Asymmetrie in der Hell-Dunkel-Grenze HDG der Lichtverteilung LV1 - LV5 realisiert werden. Weiters zeigt **Figur 2** schematisch die Lage des Brennpunktes F200 des Umlenksystems 200.

Die beiden Umlenkflächen ergeben sich beispielsweise dadurch, dass in parallelen Vertikalschnitten die ersten Schnittkurven und/oder die zweiten Schnittkurven identische Form aufweisen.

Bevorzugt ist allerdings vorgesehen, dass in parallelen Vertikalschnitten Ev die ersten Schnittkurven K102 und die zweiten Schnittkurven K103 unterschiedliche Form, insbesondere unterschiedliche Krümmungen, aufweisen, und die erste und die zweite Umlenkfläche 102, 103 sich jeweils durch Rotation der ersten und zweiten Schnittkurve K102, K103 um ihre jeweilige Symmetrieachse SA102, SA103 gebildet wird, beispielsweise um die jeweilige Symmetrieachse SA102, SA103 in der vertikalen Längsmittelebene, wie in **Figur 1a** gezeigt. Analoge Überlegungen gelten auch für die Ausführung gemäß Figur 1b, die weiter unten noch erörtert wird.

Der Lichteinkoppelbereich 101 ist vorzugsweise in Form eines Kollimators, insbesondere eines TIR-Kollimators, welcher die von der Lichtquelle 10 in den Lichteinkoppelbereich 101 eingespeisten Lichtstrahlen mittels Totalreflexion ausrichtet, ausgebildet. Der Lichteinkoppelbereich 101 bzw. TIR-Kollimator richtet die Lichtstrahlen in die erste Lichtausbreitungsrichtung Y1 aus. Vorzugsweise werden die Lichtstrahlen S1 dabei in Richtung der Blendenkante 105 gebündelt.

Das eingekoppelte Licht bewegt sich somit in die erste Lichtausbreitungsrichtung Y1, wobei diese Lichtstrahlen S1 vorzugsweise gebündelt sind, d.h. in Richtung der Kante 105 zusammenlaufen. Bei einer idealen, punktförmigen Lichtquelle könnte vorgesehen sein, dass die Lichtstrahlen in die Kante oder in einen Punkt, der auf oder nahe zu der Kante liegt, fokussiert werden. Durch die in Praxis gegebene räumliche Ausdehnung der Lichtquelle 10 bewegen sich aber auch Lichtstrahlen in einem Abstand oberhalb der Kante an der Kante vorbei. Diese oberhalb passierenden Strahlen beleuchten in der Lichtverteilung den unterhalb der Hell-Dunkel-Grenze HDG liegenden Bereich bzw. den unteren Bereich der Lichtverteilung LV1 - LV5, je näher sich die Lichtstrahlen an der Kante 105 vorbeibewegen, ums weiter oben liegen diese Lichtstrahlen im Lichtbild. Die Kante 105 ist im Lichtbild als Hell-Dunkel-Grenze HDG zu erkennen, welche das Lichtbild nach oben hin begrenzt. Nachdem die Lichtstrahlen S1 gebündelt und im Wesentlichen auf die Kante gerichtet sind, ist im Bereich der Hell-Dunkel-Grenze die Lichtverteilung am hellsten bzw. treten dort die höchsten Werte der Beleuchtungsstärke auf.

**Figur 1b** zeigt eine Beleuchtungsvorrichtung 1 ähnlich zu jener aus **Figur 1** **und** 1a. Die Ausgestaltung aus **Figur 1b** unterscheidet sich dadurch, dass die erste Schnittkurve K102 in diesem Beispiel konvex gekrümmt ist, wiederum aber die Form eines Astes einer Hyperbel aufweist. Ein Brennpunkt F102 dieser Hyperbel liegt wiederum außerhalb des Lichtleitkörpers 100, in einem der zweiten Lichtumlenkfläche 103 abgewandten Bereich des Lichtleitkörpers 100. Die anderen Zusammenhänge sind analog zu **Figur 1a****,** weshalb an dieser Stelle nicht näher darauf eingegangen wird.

Die Ausführungsformen unterscheiden sich hauptsächlich dadurch, dass bei der Ausführungsform nach **Figur 1****/****1a** das Zwischenbild, welches im Brennpunkt F103 entsteht, verkleinert ist, während es in bei der Ausführungsform gemäß **Figur 1b** vergrößert ist.

**Figur 3** **und** **4** zeigen ein Beleuchtungssystem 1000, welche fünf erfindungsgemäße Beleuchtungsvorrichtungen 1 umfasst. Diese sind seitlich nebeneinander angeordnet und einstückig miteinander verbunden. Die Beleuchtungsvorrichtung weisen jeweils eine vertikale Längsmittelebene Ev auf; diese können parallel zueinander verlaufen, sind aber vorzugsweise unter einem Winkel zueinander angeordnet, sodass in Lichtausbreitungsrichtungen Y1 gesehen die Längsmittelebenen sich vor dem Beleuchtungssystem schneiden. Durch die Neigung der jeweiligen Längsmittelebenen lem; Ev zueinander werden die Lichtverteilungen LV1 - LV5 wie in **Figur 8** gezeigt seitlich zueinander versetzt abgebildet, sodass eine gewünschte Breite des Lichtbildes realisiert werden kann. Benachbarte Lichtverteilungen überlappen sich vorzugsweise.

Die Beleuchtungsvorrichtungen erzeugen somit jeweils eine Lichtverteilung LV1 - LV5, welche gemeinsam dann die resultierende Gesamtlichtverteilung LV, beispielsweise eine Abblendlichtverteilung LV bilden. Eine solche Gesamtlichtverteilung ist in **Figur 8** schematisch gezeigt.

Die Lichtquellen 10 können in einer Reihe, insbesondere seitlich nebeneinander angeordnet sein.

Die Lichtleitkörper 100, insbesondere deren Lichtaustrittsflächen 104, münden in eine gemeinsame, vorzugsweise ebene, System-Lichtaustrittsfläche 1410. Die System-Lichtaustrittsfläche 1410 steht in dem gezeigten Beispiel senkrecht zu einer Längsmittelebene LEM eines, insbesondere des zentralen Lichtleitkörpers 100.

**Figur 5 und 6** zeigen ein im Wesentlichen analoges Beleuchtungssystem 1000, bei dem allerdings die System-Lichtaustrittsfläche 1410 schräg, unter einem Winkel α ungleich 0° zu der Längsmittelebene LEM verläuft.

Wie gezeigt, münden die Lichtaustrittsflächen 104 in den beiden Beispielen vorzugsweise in einen vorgelagerten, vorzugsweise einstückig mit den Lichtleitkörpern 100 ausgebildeten, lichtleitenden, insbesondere transparenten Körper 1400, welcher den Lichtaustrittsflächen 104 gegenüberliegend die die System-Lichtaustrittsfläche 1410 aufweist.

Zur Homogenisierung des aus einem Lichtleitkörper oder aus der System-Lichtaustrittsfläche 1410 austretenden Lichtes kann vorgesehen sein, dass auf dieser ebenen Lichtaustrittsfläche Polsteroptiken 1420 vorgesehen sind, wie dies in Figur 6 schematisch gezeigt ist. Solche Polsteroptiken 1420 sind natürlich nicht auf die Ausführungsform nach **Figur 6** eingeschränkt.

Der große Vorteil einer erfindungsgemäßen Beleuchtungsvorrichtung bzw. einer erfindungsgemäßen Beleuchtungssystems besteht darin, dass sich die Kante/Blendenkante des Umlenksystems im Inneren des Lichtleiterkörpers befindet. Der Lichteinkoppelbereich, insbesondere der TIR-Kollimator das Umlenksystem samt Blendenkante können in einem Körper ausgebildet sein, sodass keine Luftspalte entstehen, die bei Designs mit Linsen unweigerlich vorhanden sind.

Die Herstellungskosten können damit stark gesenkt werden, da keine Projektionslinse mehr notwendig ist und keine Werkzeuge dafür erforderlich sind. Bei der Verwendung von Linse muss das Licht vier optische Medien passieren, einmal ausgehend von der Lichtquelle von Luft zum Material des TIR-Kollimators, der nächste Übergang vom Kollimatormaterial zur Luft, der nächste von der Luft zum Material der Linse und am Ende vom Material der Linse zur Luft. Durch das Entfernen der Linse aus dem Design wird die Hälfte dieser Übergänge entfernt, was sich positiv auf die Effizienz des Designs auswirkt.

## Patentansprüche

1. Beleuchtungsvorrichtung (1) für ein Kraftfahrzeug, wobei die Beleuchtungsvorrichtung (1) umfasst:
- eine Lichtquelle (10), welche dazu eingerichtet ist, Licht zu emittieren,
- einen transparenten Lichtleitkörper (100), welcher dazu eingerichtet ist, von der Lichtquelle (10) emittiertes Licht als Lichtverteilung (LV1 - LV5) abzubilden, sowie
- einen Lichteinkoppelbereich (101), welcher dazu eingerichtet ist, von der Lichtquelle (10) emittiertes Licht in den Lichtleitkörper (100) einzukoppeln,
wobei
der Lichtleitkörper (100) an einer Oberseite (1100) eine erste Lichtumlenkfläche (102), an einer Unterseite (1200) eine zweite Lichtumlenkfläche (103) sowie eine Lichtaustrittsfläche (104) aufweist, wobei
von der Lichtquelle (10) emittiertes und über den Lichteinkoppelbereich (101) in den Lichtleitkörper (100) eingekoppeltes Licht sich in dem Lichtleitkörper (100) als erstes Lichtbündel (S1) in einer ersten Lichtausbreitungsrichtung (Y1) fortpflanzt, wobei der Lichtleitkörper (100), beispielsweise an einer Unterseite (1200), eine quer zu der ersten Lichtausbreitungsrichtung (Y1) verlaufende Kante (105) aufweist, und wobei
nach der Kante (105) das Licht sich als zweites Lichtbündel (S2) zu der ersten Lichtumlenkfläche (102) in einer zweiten Lichtausbreitungsrichtung (Y2) fortpflanzt, wobei die zweite Lichtausbreitungsrichtung (Y2) dieselbe Richtung aufweist wie die erste Lichtausbreitungsrichtung (Y1), und
von der ersten Lichtumlenkfläche (102) als drittes Lichtbündel (S3) zu der zweiten Lichtumlenkfläche (103) umgelenkt wird und von der zweiten Lichtumlenkfläche (103) als viertes Lichtbündel (S4) zu der Lichtaustrittsfläche (104) umgelenkt wird, über die Lichtaustrittsfläche (104) als fünftes Lichtbündel (S5) austritt und als Lichtverteilung (LV1 - LV5) in einen Bereich vor dem Lichtleitkörper (100) abgebildet wird, wobei die Lichtaustrittsfläche (104) eben ausgebildet ist,
wobei in einem Schnitt oder mehreren Schnitten durch den Lichtleitkörper (100) entlang einer oder mehrerer vertikaler Schnittebenen (Ev), welche parallel zu der ersten Lichtausbreitungsrichtung (Y1) oder parallel zu einer vertikalen Längsmittelebene (LEM) verläuft bzw. verlaufen, die erste Lichtumlenkfläche (102) in der oder den Schnittebenen (Ev) eine erste Schnittkurve (K102) bildet, und die zweite Lichtumlenkfläche (103) eine zweite Schnittkurve (K103) bildet, **dadurch gekennzeichnet, dass**
- die erste Schnittkurve (K102) konvex oder konkav gekrümmt ist und die Form eines Astes einer Hyperbel aufweist, wobei ein Brennpunkt (F102) der Hyperbel außerhalb des Lichtleitkörpers (100), in einem der zweiten Lichtumlenkfläche (103) abgewandten Bereich des Lichtleitkörper (100) liegt, und wobei
- die zweite Schnittkurve (K103) konvex gekrümmt ist und die Form einer Parabel mit einem Brennpunkt (F103) aufweist, wobei der Brennpunkt (F103) der Parabel mit dem außerhalb des Lichtleitkörpers (100) in einem der zweiten Lichtumlenkfläche (103) abgewandten Bereich des Lichtleitkörper (100) liegenden Brennpunkt (F102) der ersten Schnittkurve (K102) zusammenfällt,
und wobei der Gesamtbrennpunkt (F200) des von der ersten Umlenkfläche (102) und der zweiten Umlenkfläche (103) gebildeten Umlenksystems (200) in der oder den Schnittebenen (Ev) an der Kante (105) oder in einem Bereich der Kante (105) derart angeordnet ist, dass das aus der ersten und der zweiten Umlenkfläche (101, 102) bestehende Umlenksystem (200) die von der Lichtquelle (10) emittierten Lichtstrahlen als Lichtverteilung (LV1 - LV5) mit einer Hell-Dunkel-Grenze (HDG), welche die Lichtverteilung (LV1 - LV5), insbesondere nach oben, begrenzt, abbildet, wobei die Hell-Dunkel-Grenze (HDG), insbesondere die Form und/oder Lage der Hell-Dunkel-Grenze (HDG), von der Kante (105) bestimmt wird.

2. Beleuchtungsvorrichtung nach Anspruch 1, wobei die Kante (105) einen oder mehrere geradlinige Abschnitte umfasst, wobei beispielsweise bei zwei oder mehr geradlinigen Abschnitten diese in einer Richtung, insbesondere einer Vertikalrichtung, zueinander versetzt angeordnet sind.

3. Beleuchtungsvorrichtung nach Anspruch 1, **wobei** die Kante (105) gekrümmt ausgebildet ist, wobei vorzugsweise die Kante in einer Petzvalfläche des Umlenksystems (200) aufsteht, die Petzvalfläche des Umlenksystems (200) tangiert, oder im Nahbereich der Petzvalfläche liegt.

4. Beleuchtungsvorrichtung nach Anspruch 3, **wobei** die Kante (105) einen oder mehrere Abschnitte umfasst, wobei bei zwei oder mehr Abschnitten diese in einer Richtung, insbesondere einer Vertikalrichtung, zueinander versetzt angeordnet sind.

5. Beleuchtungsvorrichtung nach einem der vorhergehenden Ansprüche, **wobei** in parallelen Vertikalschnitten (Ev) die ersten Schnittkurven (K102) und/oder die zweiten Schnittkurven (K103) identische Form aufweisen.

6. Beleuchtungsvorrichtung nach einem der Ansprüche 1 bis 4, **wobei** in parallelen Vertikalschnitten (Ev) die ersten Schnittkurven (K102) und/oder die zweiten Schnittkurven (K103) unterschiedliche Form, insbesondere unterschiedliche Krümmungen aufweisen, wobei beispielsweise die erste und die zweite Umlenkfläche (102, 103) jeweils durch Rotation der ersten und zweiten Schnittkurve (K102, K103) ihrer jeweiligen Symmetrieachse gebildet.

7. Beleuchtungsvorrichtung nach einem der vorhergehenden Ansprüche, **wobei** der Lichteinkoppelbereich (101) derart, z.B. in Form eines Kollimators, ausgebildet ist, dass die von der Lichtquelle (10) emittierten Lichtstrahlen im Lichtleitkörper (100) im Wesentlichen in die erste Lichtausbreitungsrichtung (Y1) ausgerichtet werden, wobei insbesondere das erste Lichtbündel (S1) in einen Bereich oberhalb der Kante (105) gebündelt wird.

8. Beleuchtungsvorrichtung nach einem der vorhergehenden Ansprüche, **wobei** der Lichteinkoppelbereich (101) und der Lichtleitkörper (100) einstückig miteinander verbunden sind und vorzugsweise aus demselben Material gebildet sind.

9. Beleuchtungsvorrichtung nach einem der vorhergehenden Ansprüche, **wobei** auf der ebenen Lichtaustrittsfläche (104) Polsteroptiken vorgesehen sind.

10. Beleuchtungssystem (1000) umfassend zwei oder mehr Beleuchtungsvorrichtungen (1) nach einem der Ansprüche 1 bis 9.

11. Beleuchtungssystem nach Anspruch 10, **wobei** die Beleuchtungsvorrichtungen (1) seitlich nebeneinander angeordnet sind, wobei beispielsweise die ersten Lichtausbreitungsrichtungen (Y1) in den Lichtleitkörpern (100) parallel zueinander ausgerichtet sind oder unter einem Winkel zueinander geneigt sind.

12. Beleuchtungssystem nach Anspruch 10 oder 11, **wobei** die Lichtleitkörper (100) der Beleuchtungsvorrichtungen (1) einstückig miteinander verbunden sind.

13. Beleuchtungssystem nach einem der Ansprüche 10 bis 12, **wobei** die Lichtleitkörper (100), beispielsweise deren Lichtaustrittsflächen (104), in eine gemeinsame, vorzugsweise ebene, System-Lichtaustrittsfläche (1410) münden oder diese bilden, wobei die System-Lichtaustrittsfläche (1410) senkrecht zu einer Längsmittelebene (LEM) eines der Lichtleitkörper (100) oder schräg, unter einem Winkel (α), insbesondere einem Horizontalwinkel, ungleich 0° zu dieser Längsmittelebene (LEM) verläuft.

14. Scheinwerfer, insbesondere Kraftfahrzeugscheinwerfer, umfassend ein oder mehrere Beleuchtungsvorrichtungen nach einem der Ansprüche 1 bis 9 und/oder umfassend ein oder mehrere Beleuchtungssysteme nach einem der Ansprüche 10 bis 13.

15. Fahrzeug, insbesondere Kraftfahrzeug, wobei das Fahrzeug ein oder mehrere Beleuchtungsvorrichtungen nach einem der Ansprüche 1 bis 9 und/oder ein oder mehrere Beleuchtungssysteme nach einem der Ansprüche 10 bis 13 oder einen oder mehrere Scheinwerfer nach Anspruch 14 aufweist.

## Claims

1. Lighting device (1) for a motor vehicle, wherein the lighting device (1) comprises:
- a light source (10) configured to emit light,
- a transparent light-guiding body (100) configured to form a light distribution (LV1 - LV5) from light emitted by the light source (10), and
- a light-coupling region (101) configured to couple light emitted by the light source (10) into the light-guiding body (100),
wherein
the light-guiding body (100) has, on an upper surface (1100), a first light-deflecting surface (102), a second light-deflecting surface (103) and a light-emitting surface (104) on a bottom surface (1200), wherein
light emitted by the light source (10) and coupled into the light-guiding body (100) via the light-coupling region (101) propagates within the light-guiding body (100) as a first light beam (S1) in a first light propagation direction (Y1), wherein the light-guiding body (100), for example, has an edge (105) on a bottom surface (1200) that extends transversely to the first light propagation direction (Y1), and wherein
after passing the edge (105), the light propagates as a second light beam (S2) toward the first light-deflecting surface (102) in a second light propagation direction (Y2), wherein the second light propagation direction (Y2) is the same as the first light propagation direction (Y1), and
is deflected by the first light-deflecting surface (102) as a third light beam (S3) toward the second light-deflecting surface (103) and is deflected by the second light-deflecting surface (103) as a fourth light beam (S4) toward the light-exit surface (104), emerges from the light-exit surface (104) as a fifth light beam (S5), and is imaged as a light distribution (LV1-LV5) in a region in front of the light-guiding body (100), wherein the light-exit surface (104) is flat,
wherein
in one or more sections through the light-guiding body (100) along one or more vertical section planes (Ev), which run parallel to the first light propagation direction (Y1) or parallel to a vertical longitudinal center plane (LEM), the first light-deflecting surface (102) forms a first section curve (K102) in the section plane(s) (Ev), and the second light-deflecting surface (103) forms a second section curve (K103), **characterized in that**
- the first cutting curve (K102) is convexly or concavely curved and has the shape of a branch of a hyperbola, wherein a focus (F102) of the hyperbola lies outside the light-guiding body (100), in a region of the light-guiding body (100) facing away from the second light-deflecting surface (103), and wherein
- the second intersection curve (K103) is convexly curved and has the shape of a parabola with a focal point (F103), wherein the focal point (F103) of the parabola coincides with the focal point (F102) of the first intersection curve (K102), which lies outside the light-guiding body (100) in a region of the light-guiding body (100) facing away from the second light-deflecting surface (103) (100),
and wherein the overall focal point (F200) of the deflection system (200) formed by the first deflection surface (102) and the second deflection surface (103) is located in the intersection plane(s) (Ev) at the edge (105) or in a region of the edge (105) in such a way that the deflection system (200), consisting of the first and second deflection surfaces (101, 102), maps the light rays emitted by the light source (10) as a light distribution (LV1 - LV5) with a light-dark boundary (HDG) that limits the light distribution (LV1 - LV5), particularly toward the top, wherein the light-dark boundary (HDG)-in particular, the shape and/or position of the light-dark boundary (HDG)-is determined by the edge (105).

2. Lighting device according to claim 1, wherein the edge (105) comprises one or more straight sections, wherein, for example, if there are two or more straight sections, they are arranged offset from one another in one direction, in particular a vertical direction.

3. Lighting device according to claim 1, wherein the edge (105) is curved, and wherein, preferably, the edge extends into a Petzval surface of the deflection system (200), is tangent to the Petzval surface of the deflection system (200), or lies in the vicinity of the Petzval surface.

4. Lighting device according to claim 3, wherein the edge (105) comprises one or more sections, and where there are two or more sections, these are arranged offset from one another in one direction, in particular a vertical direction.

5. Lighting device according to any one of the preceding claims, wherein, in parallel vertical sections (Ev), the first section curves (K102) and/or the second section curves (K103) have identical shapes.

6. Lighting device according to any one of claims 1 through 4, wherein, in parallel vertical sections (Ev), the first section curves (K102) and/or the second section curves (K103) have different shapes, in particular different curvatures, wherein, for example, the first and second deflection surfaces (102, 103) are each formed by rotating the first and second cross-sectional curves (K102, K103) about their respective axes of symmetry.

7. Lighting device according to any one of the preceding claims, wherein the light-coupling region (101) is configured such that, e.g., in the form of a collimator, such that the light rays emitted by the light source (10) are aligned within the light-guiding body (100) substantially in the first light propagation direction (Y1), wherein, in particular, the first light beam (S1) is focused into a region above the edge (105).

8. Lighting device according to any of the preceding claims, wherein the light-coupling region (101) and the light-guiding body (100) are integrally connected to one another and are preferably formed from the same material.

9. Lighting device according to any one of the preceding claims, wherein diffusing optics are provided on the flat light-emitting surface (104).

10. Lighting system (1000) comprising two or more lighting devices (1) according to any one of claims 1 through 9.

11. Lighting system according to claim 10, wherein the lighting devices (1) are arranged side by side, wherein, for example, the first light propagation directions (Y1) in the light-guiding bodies (100) are aligned parallel to one another or are inclined at an angle to one another.

12. Lighting system according to claim 10 or 11, wherein the light-guiding bodies (100) of the lighting devices (1) are integrally connected to one another.

13. Lighting system according to any one of claims 10 through 12, wherein the light-guiding bodies (100)-for example, their light-emitting surfaces (104)-converge into or form a common, preferably planar, system light-emitting surface (1410), wherein the system light-emitting surface (1410) extends perpendicular to a longitudinal center plane (LEM) of one of the light-guiding bodies (100) or obliquely, at an angle (α)-in particular a horizontal angle-unequal to 0° relative to this longitudinal center plane (LEM).

14. Headlight, in particular a motor vehicle headlight, comprising one or more lighting devices according to any one of claims 1 through 9 and/or comprising one or more lighting systems according to any one of claims 10 through 13.

15. Vehicle, in particular a motor vehicle, wherein the vehicle comprises one or more lighting devices according to any one of claims 1 through 9 and/or one or more lighting systems according to any one of claims 10 through 13 or one or more headlights according to claim 14.

## Revendications

1. Dispositif d'éclairage (1) pour un véhicule automobile, le dispositif d'éclairage (1) comprenant:
- une source lumineuse (10) agencée pour émettre de la lumière,
- un corps de guidage de lumière transparent (100) agencé pour reproduire la lumière émise par la source lumineuse (10) sous forme de répartition lumineuse (LV1 - LV5), ainsi que
- une zone d'injection de lumière (101) agencée pour injecter la lumière émise par la source lumineuse (10) dans le corps de guidage de lumière (100),
dans lequel
le corps de guidage de lumière (100) présente, sur une face supérieure (1100), une première surface de déviation de la lumière (102), sur une face inférieure (1200), une deuxième surface de déviation de la lumière (103) ainsi qu'une surface de sortie de la lumière (104), la
la lumière émise par la source lumineuse (10) et injectée dans le corps de guidage de lumière (100) via la zone d'injection de lumière (101) se propage dans le corps de guidage de lumière (100) sous la forme d'un premier faisceau lumineux (S1) dans une première direction de propagation de la lumière (Y1), le corps de guidage de lumière (100), présente par exemple, sur une face inférieure (1200), un bord (105) s'étendant transversalement à la première direction de propagation de la lumière (Y1), et dans lequel
après avoir franchi l'arête (105), la lumière se propage sous la forme d'un deuxième faisceau lumineux (S2) vers la première surface de déviation de la lumière (102) dans une deuxième direction de propagation de la lumière (Y2), la deuxième direction de propagation de la lumière (Y2) étant identique à la première direction de propagation de la lumière (Y1), et
est déviée par la première surface de déviation de la lumière (102) sous forme d'un troisième faisceau lumineux (S3) vers la deuxième surface de déviation de la lumière (103), puis déviée par la deuxième surface de déviation de la lumière (103) sous forme d'un quatrième faisceau lumineux (S4) vers la surface de sortie de la lumière (104), sort par la surface de sortie de lumière (104) sous forme d'un cinquième faisceau lumineux (S5) et est projeté sous forme de répartition lumineuse (LV1 - LV5) dans une zone située devant le corps de guidage de lumière (100), la surface de sortie de la lumière (104) étant plane,
où
dans une ou plusieurs sections traversant le corps de guidage de lumière (100) le long d'un ou de plusieurs plans de coupe verticaux (Ev), qui s'étendent parallèlement à la première direction de propagation de la lumière (Y1) ou parallèlement à un plan médian longitudinal vertical (LEM), la première surface de déviation de la lumière (102) forme, dans le ou les plans de coupe (Ev), une première courbe de coupe (K102), et la deuxième surface de déviation de la lumière (103) forme une deuxième courbe de coupe (K103), **caractérisé en ce que**
- la première courbe de section (K102) présente une courbure convexe ou concave et a la forme d'une branche d'hyperbole, un foyer (F102) de l'hyperbole se situant à l'extérieur du corps de guidage de lumière (100), dans une zone du corps de guidage de lumière (100) opposée à la deuxième surface de déviation de la lumière (103), et
- la deuxième courbe de section (K103) présente une courbure convexe et a la forme d'une parabole avec un foyer (F103), le foyer (F103) de la parabole coïncidant avec le foyer (F102) de la première courbe de section (K102), situé à l'extérieur du corps conducteur de lumière (100), dans une zone de celui-ci opposée à la deuxième surface de déviation de la lumière (103) (100),
et dans lequel le foyer global (F200) du système de déviation (200) formé par la première surface de déviation (102) et la deuxième surface de déviation (103) est situé dans le ou les plans d'intersection (Ev) au niveau du bord (105) ou dans une zone du bord (105), de telle sorte que le système de déviation (200), constitué des première et deuxième surfaces de déviation (101, 102), reproduise les rayons lumineux émis par la source lumineuse (10) sous la forme d'une répartition lumineuse (LV1 - LV5) avec une limite clair-foncé (HDG) qui délimite la répartition lumineuse (LV1 - LV5), notamment vers le haut, la limite clair-foncé (HDG), en particulier la forme et/ou la position de la limite clair-foncé (HDG), étant déterminée par le bord (105).

2. Dispositif d'éclairage selon la revendication 1, dans lequel le bord (105) comprend un ou plusieurs segments rectilignes, ces segments, par exemple lorsqu'il y en a deux ou plus, étant décalés les uns par rapport aux autres dans une direction, en particulier une direction verticale.

3. Dispositif d'éclairage selon la revendication 1, dans lequel le bord (105) est courbe, le bord s'élevant de préférence dans une surface de Petzval du système de déviation (200), étant tangent à la surface de Petzval du système de déviation (200) ou se situant à proximité immédiate de la surface de Petzval.

4. Dispositif d'éclairage selon la revendication 3, dans lequel l'arête (105) comprend une ou plusieurs sections, ces sections, lorsqu'elles sont au nombre de deux ou plus, étant décalées les unes par rapport aux autres dans une direction, en particulier une direction verticale.

5. Dispositif d'éclairage selon l'une des revendications précédentes, dans lequel, dans des coupes verticales parallèles (Ev), les premières courbes de coupe (K102) et/ou les deuxièmes courbes de coupe (K103) présentent une forme identique.

6. Dispositif d'éclairage selon l'une des revendications 1 à 4, dans lequel, dans des sections verticales parallèles (Ev), les premières courbes de section (K102) et/ou les deuxièmes courbes de section (K103) présentent des formes différentes, en particulier des courbures différentes, les première et deuxième surfaces de déviation (102, 103) sont formées respectivement par rotation des première et deuxième courbes de section (K102, K103) autour de leur axe de symétrie respectif.

7. Dispositif d'éclairage selon l'une des revendications précédentes, dans lequel la zone d'injection de lumière (101) est conçue de telle sorte, par exemple sous la forme d'un collimateur, de telle sorte que les rayons lumineux émis par la source lumineuse (10) soient orientés dans le corps de guidage de lumière (100) essentiellement dans la première direction de propagation de la lumière (Y1), le premier faisceau lumineux (S1) étant notamment concentré dans une zone située au-dessus du bord (105).

8. Dispositif d'éclairage selon l'une des revendications précédentes, dans lequel la zone d'injection de lumière (101) et le corps conducteur de lumière (100) sont reliés entre eux d'un seul tenant et sont de préférence formés du même matériau.

9. Dispositif d'éclairage selon l'une des revendications précédentes, dans lequel des optiques de diffusion sont prévues sur la surface plane de sortie de la lumière (104).

10. Système d'éclairage (1000) comprenant deux ou plusieurs dispositifs d'éclairage (1) selon l'une des revendications 1 à 9.

11. Système d'éclairage selon la revendication 10, dans lequel les dispositifs d'éclairage (1) sont disposés côte à côte, les premières directions de propagation de la lumière (Y1) dans les corps conducteurs de lumière (100) étant, par exemple, orientées parallèlement les unes aux autres ou inclinées les unes par rapport aux autres selon un angle.

12. Système d'éclairage selon la revendication 10 ou 11, dans lequel les corps de guidage de lumière (100) des dispositifs d'éclairage (1) sont reliés entre eux d'un seul tenant.

13. Système d'éclairage selon l'une des revendications 10 à 12, dans lequel les guides de lumière (100), par exemple leurs surfaces de sortie de lumière (104), débouchent dans une surface de sortie de lumière commune du système (1410), de préférence plane, ou forment celle-ci, la surface de sortie de lumière du système (1410) s'étend perpendiculairement à un plan médian longitudinal (LEM) de l'un des corps conducteurs de lumière (100) ou obliquement, selon un angle (α), en particulier un angle par rapport à l'horizontale, différent de 0°, par rapport à ce plan médian longitudinal (LEM).

14. Projecteur, en particulier projecteur de véhicule automobile, comprenant un ou plusieurs dispositifs d'éclairage selon l'une des revendications 1 à 9 et/ou comprenant un ou plusieurs systèmes d'éclairage selon l'une des revendications 10 à 13.

15. Véhicule, en particulier véhicule automobile, le véhicule comportant un ou plusieurs dispositifs d'éclairage selon l'une des revendications 1 à 9 et/ou un ou plusieurs systèmes d'éclairage selon l'une des revendications 10 à 13 ou un ou plusieurs projecteurs selon la revendication 14.
